# EUROPEAN PATENT SPECIFICATION

(11) **EP 0 438 624 B1**
(45) Date of publication and mention of the grant of the patent: **18.05.1994**
(21) Application number: 90105755.4
(22) Date of filing: 27.03.1990
(51) Int. Cl.: G01P 3/44

(54) **Device enabling the revolutionary speed to be measured between the races of a rolling bearing for the support of a vehicle wheel**
Vorrichtung zur Messung der relativen Drehgeschwindigkeit zweier Laufringe eines Kugellagers für die Befestigung eines Fahrzeugrades
Dispositif pour mesurer la vitesse de rotation relative entre deux bagues de roulement pour le support d'une roue d'un véhicule

(30) Priority: 15.12.1989 IT 6809389
(43) Date of publication of application: 31.07.1991
(73) Proprietor: SKF INDUSTRIE S.P.A., I-10123 Torino (IT)
(72) Inventor: Varvello, Angelo, I-10144 Torino (IT); Moretti, Roberto, I-10020 Cambiano (TO) (IT); Vignotto, Angelo, I-10134 Torino (TO) (IT)
(74) Representative: Lotti, Giorgio

(56) References cited:
- DE-A- 2 505 802
- DE-A- 3 523 374
- GB-A- 2 123 558
- US-A- 3 188 620

## Description

Subject or the invention is a device enabling the revolutionary speed between two rotating parts, such as the supports of a vehicle wheel,to be measured.

It is known that at present special control circuits known as ABS are installed on vehicles, the purpose of which is to prevent the wheels from blocking during the braking phase.

The measurement systems presently being used are realized by means of common basic components such as :phonic ring, measurement sensor, an on-board computer and an oleodynamic gearcase.

Typically a phonic ring is a toothed ring mounted on the rotating part to keep under control while the sensor either passive or active, is installed on the stationary part of the frame at a certain distance from the opposite toothed area of the phonic ring .

The electric signals from the sensors are sent to the on-board computer of the ABS system measuring the speed difference between wheels.

Passive sensors, in use at present, are reluctance-change sensors and require no feed; however, these sensors must necessarily be mounted outside the beearing and are exposed to possible shocks, polluting agents and other possible dangers.

In particular this sensor can be damaged by metal particles(wear) from the brakes , which are close to the sensors and by high temperatures, developed by brake discs; they also need to be duly calibrated by the user during the assembly phase.

Active sensors presently in use are typically inductive, consisting in a small coil fed by an oscillating circuit or by elements sensitive to magnetic field variations (Hall effect).

These sensors can be housed inside wheel bearings, but they nevertheless need input from the outside.

A measuring system provided in bearings is known from Patent application DE-A-2505802. This system comprises a magnetized ring and an inductive sensor comprising pole pieces, both being fixed to parts of a bearing which move with the rotating race and the stationary race, respectively. The device has a considerable path through which particles can get to the sensor and magnetized wheel. This particular arrangement is not suitable for use in vehicle hub bearings, as the magnetized ring and the sensor coil would not be adequately protected with respect to metal particles coming from the brakes, high temperatures and other polluting agents that are present near the wheels such as dirt, dust and water.

Another measuring device is known from DE-A-3523374, wherein a coil is contained between a couple of complementary toothed sensor rings having an L shaped cross section. A rotating ring is magnetized in its outer part facing the coil radially. The arrangement of the sensor unit and magnetized ring that is disclosed in this document is not capable of overcoming the above mentioned protection problems that occur with measuring devices that are proximate to wheel hub bearings.

It is an object of the invention to provide a device enabling to overcome the inconveniences of the above mentioned devices now being used.

More in particular, it is an object of the invention to provide a device according to claim 1.

A device according to the invention is described hereinafter with reference to the accompanying drawings, wherein:
Figures 1 to 3 show sections of a wheel hub bearing and relevant shields equipped with the device subject of the invention in various possible arrangements;
Figures 4 to 6 are respectively the expanded, front and side view of a detail of the sensor of figures 1 to 3; and
Figure 7 is the front view of the magnetized phonic ring of Figures 1, 2 and 3.

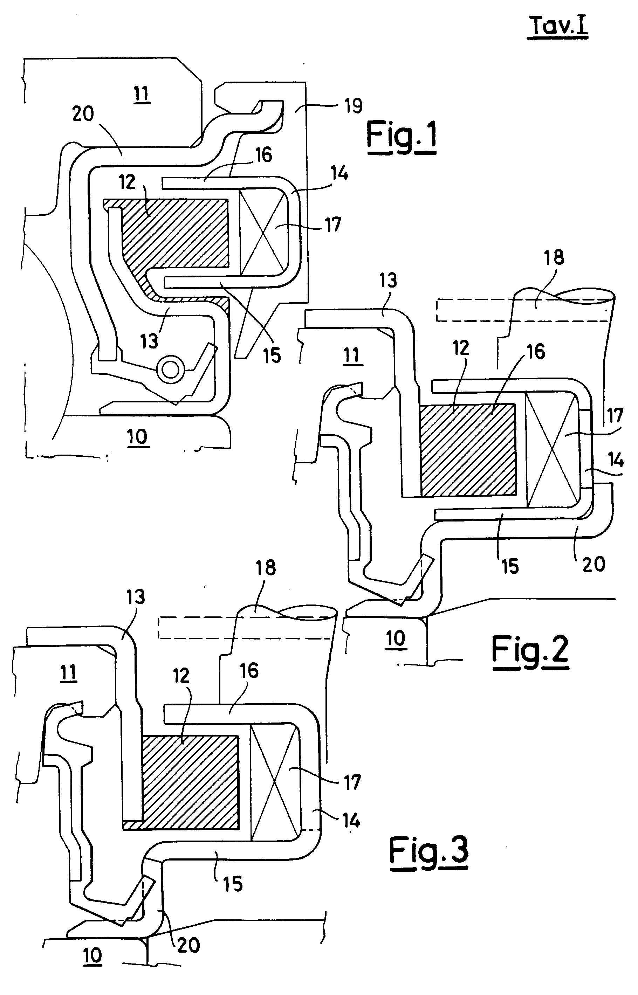

Figures 1 to 3 show a detail of a bearing equipped with the device of this invention in a few different arrangements. In Figs. 2 and 3 the outer race 11 of the bearing rotates, while inner race 10 is stationary. Vice versa, in Fig. 1 inner race 10 rotates and outer race 11 is stationary.

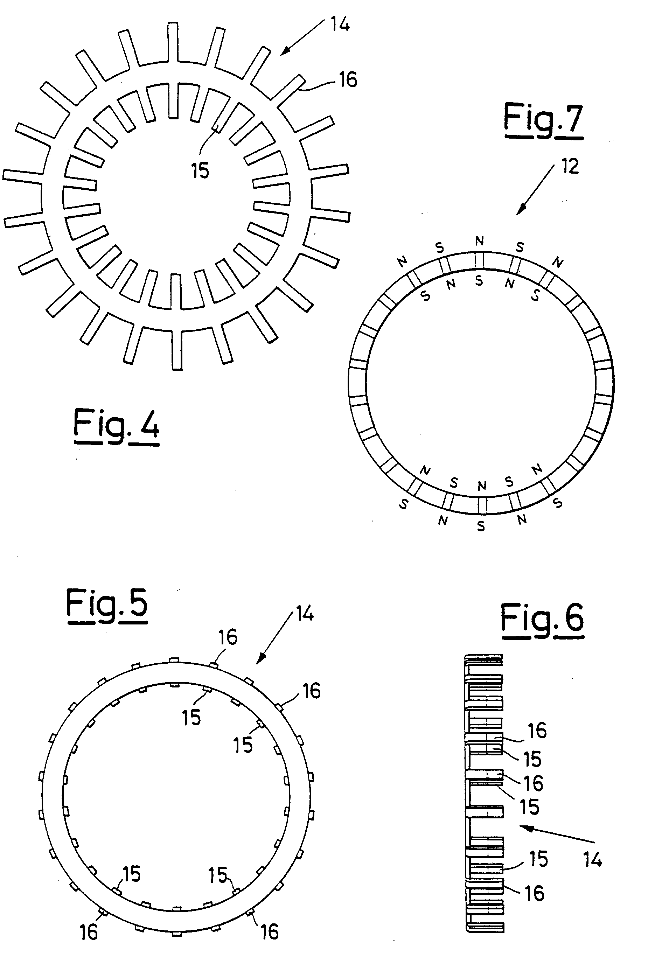

In all of the above arrangements phonic ring 12 is made of magnetized material according to the invention as schematically illustrated by fig. 7, that is with pairs of magnetic poles of opposite polarity alternating in variable number according to the ring diameter and maker's requirements.

Ring 12 is supported by a rigid shield 13, duly sized and fixed to the rotating race of the bearing, which, as already described for the configuration of Fig. 1, is inner race 10, while for the configurations described by Figs. 2 and 3 is outer race 11.

Facing ring 12 is the sensor, various configurations of which are possible and some of which are shown by Figs. 4, 5 and 6.

The first configuration is shown by figs. 4, 5 and 6 where the sensor has a ring 14 which, flattened (fig. 4) has inner radial projections 15 and outer radial projections 16 that get folded towards one side of the ring in the configuration shown by figs. 5 and 6. The sensor ring 14 takes a substantially C shaped cross section wherein a coil 17 is wound. The coil 17 (figs. 1 to 3) is connected with a data-processing on-board gearcase by means of a cable or connector 18.

For what ring 14 is still concerned, it faces the magnetized ring 12 axially, so that the ring 12 remains partially inserted between the tips of outer projections 16 and inner projections 15. This arrangement permits the projections to close a number N of pole pieces, also variable, like the pairs of magnetic poles with opposite polarity of rotating ring 12.

Referring to fig. 1, the sensor ring 14 is supported by a block 19 engaged on the projected end of shield 20 of the bearing.

In the configuration of fig. 2 the sensor ring 14 is fixed by its inner projections 15 to the shield 20, while in the configuration of fig. 3 the ring 14 is welded to the shield 20 or obtained as a unit therewith. In all configurations, however, the sensor unit is integral with the shield 20 and protected by it. Therefore, the sensor does not feel any variation of the brake disc temperature, is not exposed to wear by metal particles coming from the brake disc, is protected against any outer polluting element and requires no previous calibration by the user. Even if the configuration of ring 14 shown in Figs. 4, 5 and 6 seems to be the most advantageous and reliable configuration, the ring can have other configurations too.

For instance, outer fins 16 or inner fins 15 can be missing, therefore the remaining fins 15 or 16 provide for closing the pole pieces of the sensor.

Alternatively, again, outer fins 16 or inner fins 15 can be replaced by a fold obtained in the ring perpendicular to the ring face so that coil 17 is contained between two endless surfaces (the face of the ring and the surface perpenicular to it) and a row of fins 15 or 16.

The latter will close the pole pieces of the sensor, while the endless surface will contain both sensor and magnetic flux.

Should one of the rows 15 or 16 be replaced by an endless surface, this could advantageously be welded or be integral with shield 20 making the unit even simpler and more reliable.

Therefore, it appears that all configurations provide a passive, inductive, flux-modulating sensor with n pole pieces integral with the bearing shield. Being passive, it requires no input; being inductive, flux-modulating and with n pole pieces it permits to obtain a signal which is directly compatible with the present gearcases and higly reliable and precise.

## Claims

1. A device enabling the revolving speed to be measured between the races (10,11) of a rolling bearing for the support of a vehicle wheel, comprising a magnetized ring (12) with pairs of alternate poles that moves with the rotating race and inductive sensor coils (17) carried by a sensor ring (14) integral with the stationary race of the bearing; the bearing being further fitted with a couple of opposite rigid annular shields (13,20) respectively fixed to the rotating race and the stationary race of the bearing, the magnetized ring (12) and the sensor ring (14) being respectively mounted on the rotating shield (13) and the stationary shield (20) so that the elements measuring the relative speed are protected outwards; characterised in that the sensor ring (14) comprises a radially disposed flat portion from the inner and outer edges of which a plurality of axial projections or pole pieces (15,16) extends, giving the ring (14) a substantially "C" shaped cross section wherein a sensor coil (17) is wound so as to face the magnetized ring (12) axially; the magnetized ring (12) being partially inserted between the tips of projections (15,16).

## Patentansprüche

1. Vorrichtung die es ermöglicht, die Differenzgeschwindigkeit zwischen den Ringen (10, 11) eines Wälzlagers zur Lagerung eines Fahrzeugrades zu messen, die einen magnetisierten Ring (12) mit paarweise angeordneten entgegengesetzten Polen umfaßt, der sich mit dem rotierenden Ring bewegt und der induktive Sensorspulen (17) umfaßt, die durch einen in den stationären Ring des Lagers eingebauten Sensorring getragen (14) sind; das Lager, das darüber hinaus mit einem Paar sich gegenüberliegender ringförmiger starrer Abdeckungen (13, 20) versehen ist, die jeweils am rotierenden Ring und am stationären Ring des Lagers angebracht sind, der magnetisierte Ring (12) und der Sensorring (14) sind jeweils an der rotierenden Abdeckung (13) und der feststehenden Abdeckung (20) so befestigt, daß die die relative Geschwindigkeit messenden Elemente nach außen hin geschützt sind; dadurch gekennzeichnet, daß der Sensorring (14) ein von den inneren und äußeren Rändern radial angeordnetes, flaches Teilstück umfaßt, von dem sich eine Vielzahl axial vorstehender Teile oder Polstücke (15, 16) erstrecken, die dem Ring (14) einen im wesentlichen "C"-förmigen Querschnitt verleihen, wobei eine Sensorspule (17) so gewickelt ist, daß sie dem magnetisierten Ring (12) axial gegenüber liegt; der magnetisierte Ring (12) ist teilweise zwischen den Enden der vorstehenden Teile (15, 16) eingefügt.

## Revendications

1. Dispositif pour mesurer la vitesse de rotation relative entre les bandes (10, 11) d'un roulement pour le support d'une roue de véhicule, comprenant un anneau magnétisé (12) avec des couples de pôles alternés en mouvement avec la bande tournante et des bobines de détection par induction (17) portées par un anneau détecteur (14) solidaire de la bande stationnaire du roulement; le roulement est en outre équipé d'un couple de carters annulaires de protection rigides et opposés (13, 20) gui sont fixés respectivement à la bande tournante et à la bande stationnaire du roulement, l'anneau magnétisé (12) et l'anneau détecteur (14) étant respectivement montés sur le carter de protection tournant (13) et sur le carter de protection stationnaire (20) de telle sorte que les éléments mesurant la vitesse relative spient protégés de l'extérieur; caractérisé en ce que l'anneau détecteur (14) comprend une partie plate radiale avec des bords interne et externe d'où partent un ensemble de projections axiales ou de pièces polaires (15, 16), ce qui confère à l'anneau (14) une forme essentiellement en "C" en vue de coupe, dans laquelle une bobine de détection (17) est enroulée pour être dans l'axe face à l'anneau magnétisé (12); l'anneau magnétisé (12) étant en partie inséré entre les têtes des projections (15, 16).
